(19) Europäisches Patentamt

European Patent Office

Office européen des brevets

(11) **EP 2 802 044 A1**

(12) **EUROPEAN PATENT APPLICATION**

(43) Date of publication:
**12.11.2014 Bulletin 2014/46**

(51) Int Cl.:
*H01S 3/094* (2006.01)    *H01S 3/0941* (2006.01)
*H01S 3/02* (2006.01)    *H01S 3/102* (2006.01)
*H01S 3/11* (2006.01)    *H01S 3/042* (2006.01)
*H01S 3/06* (2006.01)    *H01S 3/10* (2006.01)

(21) Application number: **13167241.2**

(22) Date of filing: **10.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Proton Laser Applications, S.L.**
**37007 Salamanca (ES)**

(72) Inventor: **Galan Valiente, Miguel**
**37007 Salamanca (ES)**

(74) Representative: **Grünecker, Kinkeldey,**
**Stockmair & Schwanhäusser**
**Leopoldstrasse 4**
**80802 München (DE)**

(54) **Solid state laser system**

(57)    A laser system comprising an active medium (105) and at least one laser diode (103) that is adapted to pump the active medium, characterized in that the laser diode is arranged such that a radiation plane of laser radiation emitted from the laser diode and corresponding to the greatest emission angle α is essentially parallel or oblique to a longitudinal axis (L) of the active medium (105). The pump LD array is arranged with the long axis of each LD being parallel to the longitudinal axis (L) of the active medium (105). A laser system comprising an active medium and a reflector (530) being arranged such that the reflector surrounds the active medium (505) with at distance to the active medium characterized in that the reflector comprises a self-supporting cylinder consisting at least in part of a metal, e.g. copper, and a method for pumping an active medium of a Q-switch laser system with a plurality of laser diodes, the method being characterized in that the active medium is pumped continuously during pumping periods of a predetermined duration, the pumping periods being provided periodically and being separated by non-pumping periods, wherein, during each pumping period, at least two laser pulses are emitted from the active medium, wherein each of the at least two laser pulses is caused by a corresponding Q-switch operation in the pumping period.

FIG. 1

EP 2 802 044 A1

Printed by Jouve, 75001 PARIS (FR)

## Description

The present invention relates to a solid state laser system.

## Prior Art

Solid state laser systems are well known in the art. Among them, laser systems comprising an active medium which is pumped by further laser diodes, thereby achieving a higher output energy of the active medium, are commonly known. The laser diodes comprise a relatively high efficiency. Such laser systems are used in a pulsed mode in order to achieve high power in the short pulses.

## Technical Problem

Starting from known solid state laser systems, it is an object of the present invention to provide a more efficient laser system in view of the exploitation of the radiation being emitted by the laser diodes for pumping the active medium and to increase the efficiency factor of the laser system with respect to the energy being emitted by the active medium and the corresponding amount of energy that is necessary to pump the active medium.

## Solution

This problem is solved by the laser system according to independent claim 1 and the laser system according to independent claim 7, as well as the method for pumping an active medium of a laser system according to claim 11 and the laser system according to claim 15.

The laser system according to the present disclosure comprises an active medium and at least 1, 5, 20, or 25 laser diode(s) that is/are adapted to pump the active medium, and is **characterized in that** the laser diode(s) is/are arranged such that a radiation plane of laser radiation emitted from the laser diode(s) and corresponding to the greatest emission angle $\alpha$ is essentially parallel or oblique to a longitudinal axis of the active medium. By arranging the laser diodes accordingly, the number of necessary laser diodes can be reduced and the energy being emitted from these laser diodes can be used more efficiently.

According to one embodiment, the laser system further comprises one or more blocks surrounding the active medium, wherein each of the blocks comprises a plurality of laser diodes, wherein each of the laser diodes is arranged such that the radiation plane of laser radiation emitted from the laser diode and corresponding to the greatest emission angle $\alpha$ is essentially parallel to the longitudinal axis of the active medium. In this embodiment, the advantage of positioning a plurality of laser diodes in accordance with the first embodiment is provided.

In accordance with this, optionally, the laser diodes are arranged, in at least one block, with a distance d to each other and the block being arranged in a distance h from the active medium, wherein the distance h is given by $h \geq \tan\left(\dfrac{\pi}{2} - \dfrac{\alpha}{2}\right) \cdot \dfrac{d}{2}$. Such an arrangement allows for utilizing the overlap of adjacent laser diodes, and the radiation emitted by these laser diodes respectively, to pump the active medium more efficiently and/or more homogeneously.

According to another embodiment, the laser system is **characterized in that** the laser diodes of each block are arranged on a straight line being parallel to the longitudinal axis of the active medium. This allows for providing a more homogeneous radiation field of the pumping radiation.

Further, it can be provided that the blocks are arranged in an angular distance to each other, the angle being measured around the centre of the active medium in a plane perpendicular to a longitudinal axis of the active medium, wherein the angular distance of two adjacent

blocks is $\dfrac{2\pi}{n}$, where n is the number of blocks. Thereby an angular homogeneity with respect to the pumping radiation is achieved.

According to yet another embodiment, the laser system further comprises a reflector being arranged between the active medium and the laser diode and surrounding the active medium and comprising portions that are transparent for the radiation that can be emitted by the laser diode, wherein the reflector is formed such that radiation that can be emitted from the laser diode and can pass through the active medium via at least one of the portions can be reflected onto the active medium. Correspondingly, radiation being emitted from the laser diodes and passing through the portions and the active medium can be reflected onto the active medium again, thereby increasing the amount that is absorbed by the active medium, thereby increasing the pumping efficiency.

In order to solve the above problem, a laser system is provided that comprises an active medium and a reflector being arranged such that the reflector surrounds the active medium with at distance to the active medium **characterized in that** the reflector comprises a self-supporting cylinder consisting at least in part of a metal, e.g. copper. By providing a corresponding cylinder, the thermal conduction of heat generated in the active medium can be improved and, further, providing quartz cylinders with a coated surface in order to reflect radiation can be avoided, thereby simplifying manufacturing processes and/or increasing the heat resistance of the reflector.

The system may be further **characterized in that** the reflector further comprises a quartz-cylinder, wherein the quartz-cylinder and the copper-cylinder are joint together. Thereby, the advantages of the provided metal cylinder and a quartz cylinder can be combined.

According to one embodiment, that the laser system further includes laser diodes being arranged outside of the reflector, wherein the reflector comprises portions being transparent for laser radiation that is emitted from the laser diodes and that are arranged such that, when the laser diodes emit laser radiation, the laser radiation can incite, through the portions, onto the active medium. Thereby, radiation that is emitted from the laser diodes can be caught within the reflector in order to achieve absorption of this radiation by the active medium in a more efficient manner.

Moreover, the active medium has a cylindrical shape and the reflector is arranged concentrically around the active medium. This provides an absorption profile of the pumping radiation that is emitted from the laser diodes that is symmetrical with respect to the longitudinal axis of the active medium.

Furthermore, in order to solve the above problem, a method for pumping an active medium of a laser system with a plurality of laser diodes is provided, the method being **characterized in that** the active medium is pumped continuously during pumping periods of a predetermined duration, the pumping periods being provided periodically and being separated by non-pumping periods, wherein, during each pumping period, at least two laser pulses are emitted from the active medium, wherein each of the at least two laser pulses is caused by a corresponding Q-switch operation in the pumping period. Therefore, energy losses of a laser pulse being emitted from the active medium can be reduced and the amount of laser pulses being emitted within a specific time period can be increased while maintaining the thermal load of the laser system, in particular of the active medium at the same level.

This method can be further **characterized in that** each pumping period has a duration of more or less than $50\mu s$ or $100\mu s$ or $250\mu s$ or 1ms or 5ms or 10ms and/or each non-pumping period has a duration of more or less than 1 ms or 2ms or 5ms or 10ms or 20ms or 50 ms or 100ms. Such longer pumping periods allow the active medium to transmit a plurality of laser pulses.

According to another embodiment, the method is **characterized in that** the duration of the non-pumping period is equal to the duration of the pumping period or the duration of the non-pumping period is not equal to the duration of the pumping period. Equal pumping periods and non-pumping periods can improve the output of the laser system with respect to a continuous emission of radiation. In contrast thereto, non-pumping periods being either longer or shorter than the pumping periods can, on the one side, lead to more laser pulses being emitted (if the non-pumping period is shorter than the pumping period) or, on the other side, to the active medium being protected from unintended damage due to thermal stress if the non-pumping period is longer than the pumping period.

According to a further embodiment, the power by which the active medium is pumped is at least 100W, or at least 500W, or at least more than 1000W. Due to the non-pumping periods being provided after each pumping period, relatively high pumping power can be utilized in order to pump the active medium.

A laser system can be provided that comprises an active medium and a plurality of laser diodes, adapted to pump said active medium, **characterized in that** the laser system is suitable to operate according to one of the above method and wherein the laser system is a laser system according to one of the above laser systems. Such a system provides the advantages explained above.

## Brief Description of the Drawings

Figure 1: Schematic depiction of a laser system according to one embodiment of the description

Figure 2a-2c: Schematic depiction of the emission profile of a laser diode according to one embodiment

Figure 3: Schematic depiction of an arrangement of multiple blocks of laser diodes according to one embodiment of the invention.

Figure 4: Schematic depiction of the reflector according to one embodiment of the invention

Figure 5: Schematic depiction of the reflector according to one embodiment of the invention

Figure 6: Schematic depiction of the graphs showing different pumping procedures

Figure 7: Schematic depiction of the cooling device according to one embodiment of the invention

Figure 8: Schematic depiction of the case according to one embodiment of the invention

## Detailed Description

### 1) Arrangement of laser diode

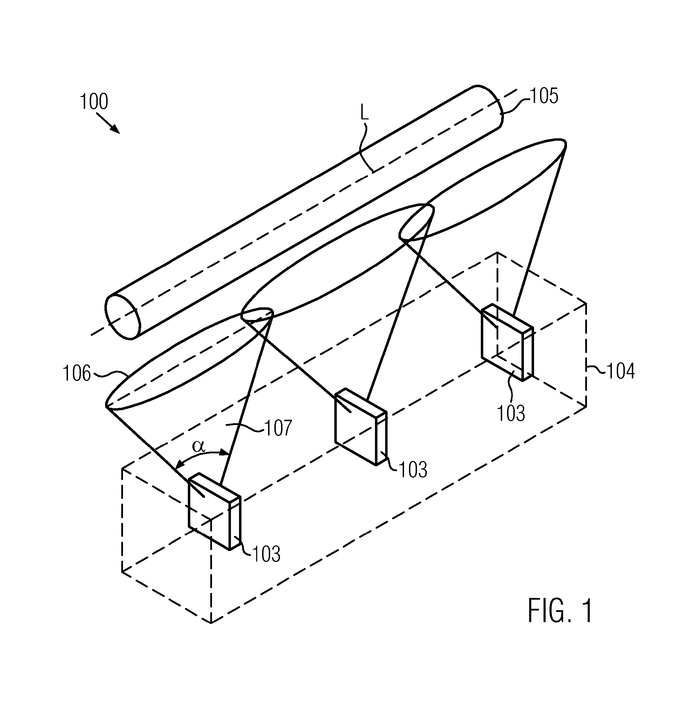

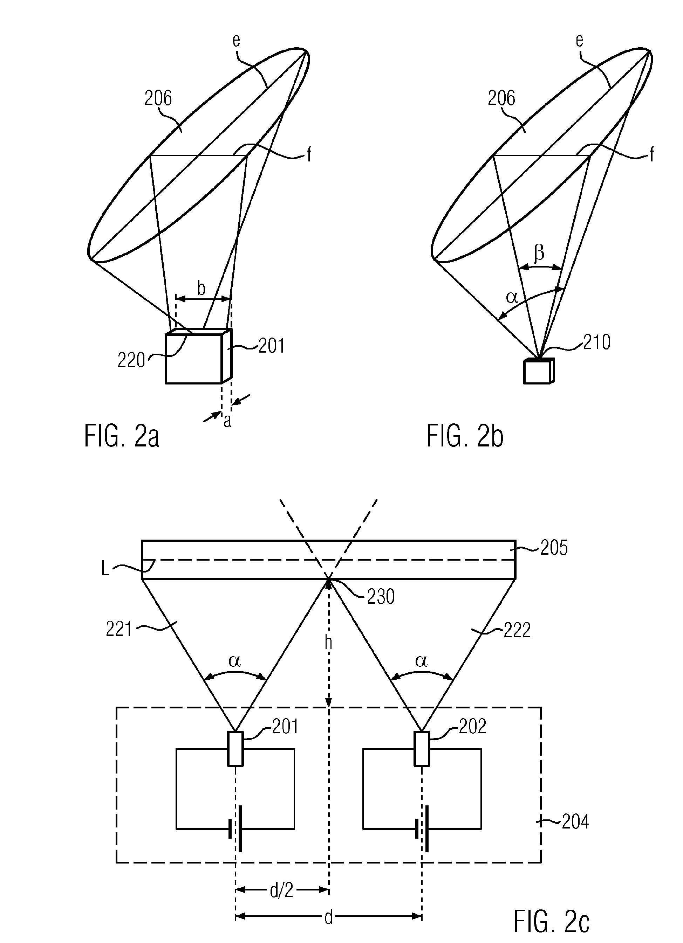

Figure 1 shows a schematic depiction of a laser system 100 according to one embodiment of the invention. This laser system comprises one active medium 105 that might be a Nd:YAG or other solid state crystal that is capable of emitting laser radiation. According to the invention, this active medium is pumped with at least one, and preferably a plurality of, laser diodes 101-103. These diodes might advantageously be arranged within a block 104. Preferably, the arrangement of the laser diodes is such that they are all arranged on a line that is parallel to the longitudinal axis of the preferably cylindrical active medium 105. Thereby, a homogeneous pumping profile with respect to the radiation inciting on the active medium can be achieved. In block 104, the laser diodes 101-103 are arranged and further devices, such as cooling devices and power supply units for the laser diodes can be provided. In view of Figure 1, the arrangement of the laser diodes 101-103 is such that their elliptical emission profile 106 incites on the active medium 105 such that the plane 107 that corresponds to the greatest emission angle $\alpha$ is in parallel to the longitudinal axis of the active medium 105. This will be further explained with reference to Figure 2.

The end surfaces of the active medium 105 can be cut at an angle different from 90° with respect to the longitudinal axis of the (cylindrical) active medium 105.

In Figure 2a, an enlarged and schematic depiction of one of the laser emitting diodes 201, that are arranged in block 104 in Figure 1, is shown. This laser diode has, for example, a cuboid shape. Laser radiation is emitted from the laser diode 201 from the surface 220. As the shape of this surface is rectangular as well, the corresponding emission profile is an ellipse that is defined by half axes e and f. Depending on the relation of the length a to the length b, one of the half axes can be much longer that the other.

Figure 2b shows a more detailed image of the emission profile. It is noted that, when it is referred to the emission profile in this application, this profile is defined by the amount of radiation having an intensity that is equal to $\dfrac{1}{e}$ or more of the maximum intensity in a section perpendicular to the optical axis of the laser diode (typically in the centre of such a section). The intensity of $\dfrac{1}{e}$ of the maximum intensity in the section in which the axes e and f are given define the length of the axes e and f. It is therefore assumed that the emission of radiation from the laser diode is limited to this region, which is defined by a cone having a ground surface of elliptical shape with half axes e and f and a peak point on the surface of the laser diode 210. Therefore, this profile is defined by the half axes e and f and the angle $\alpha$ and $\beta$ that correspond to cross sections of the cone that are defined by the peak point and the half axes e and f respectively. Although outside the cone radiation is emitted from the laser diode, the intensity of this radiation is much smaller that the intensity of the radiation emitted within the cone. Therefore, in order to provide reasonable dimensions for the size of specific components, reference is made to the emission profile being only defined by radiation being emitted within the cone, being defined by peak point 210 on the laser diode shown in Figure 2b and the angles $\alpha$ and $\beta$ and the half axes e and f respectively.

Taking this into account, it is the finding of the present invention that, as shown in Figure 2c, the laser emitting diodes are arranged such that radiation being emitted under the angle $\alpha$, i.e. corresponding to radiation being emitted in the cross-section of the cone defined by the emission point 210 and the greater half axis e travels in parallel to the longitudinal axis L of the active medium 205. It can be advantageous to allow the radiation, being emitted by two adjacent laser diodes, to overlap before on the boundary surface of the active medium 205, thereby ensuring that the complete active medium 205 receives energy from the laser diodes and can, therefore, be pumped (homogeneously). In order to achieve this, the distance of the laser emitting diodes with respect to the boundary surface of the active medium 205, and the distance between two adjacent laser diodes 201 and 202, has to fulfill a specific relationship that depends on the angle $\alpha$ of the radiation emission profile 221 of the first laser diode 201 and the emission profile 222 of the second laser diode 202. It is assumed that the emission profile of both laser diodes is the same. If laser diodes 201 and 202 are placed at a distance d from each other, they have to be positioned at a distance h from the boundary surface of the active medium 205, such that the distance h is given by $h \geq \tan\left(\dfrac{\pi}{2} - \dfrac{\alpha}{2}\right) \cdot \dfrac{d}{2}$. Thereby, the emission profiles of the first laser diode 201 and the second laser diode 202 overlap at point 230. If the laser diodes 201 and 202 are arranged at a distance h, fulfilling the equal relation of the equation above, the emission profile will overlap right on the boundary surface of the active medium 205. In case the distance h is longer, emission profiles 221 and 222 of the laser diodes 201 and 202, respectively, overlap before reaching the active medium 205. It can be advantageous to arrange the laser diodes 201 and 202 at a distance h being slightly greater than the distance h that would fulfill the equal relation in the above equation, in order to take into account deviations due to thermal stress to the laser diodes 201 and 202 while pumping, or to compensate thermal expansion of the active medium 205 in a radial direction.

In the prior art, laser diodes have typically been arranged with the short axis f being parallel to the longitudinal axis since, thereby, the laser diodes could be provided in the form of laser bars, wherein neighboring laser diodes are conveniently placed on a common heat sink. The present disclosure deviates from this concept. It is not strictly necessary that the long axis e be perfectly parallel to the longitudinal axis of the active medium 205 since the advantage of the present disclosure can also be achieved if the longitudinal axis has an angle of less than 45°, or less than 30°, 20°, or 10° with respect to the longitudinal axis of the active medium. Hence, the effect of the invention can also be achieved if the radiation plane of laser radiation emitted from the laser diode(s) and corresponding to the greatest emission angle $\alpha$ is oblique (i.e. not perpendicular) to the longitudinal axis of the active medium, optionally at an angle of less than 45°, or less than 30°, or less than 20°, or less than 10°.

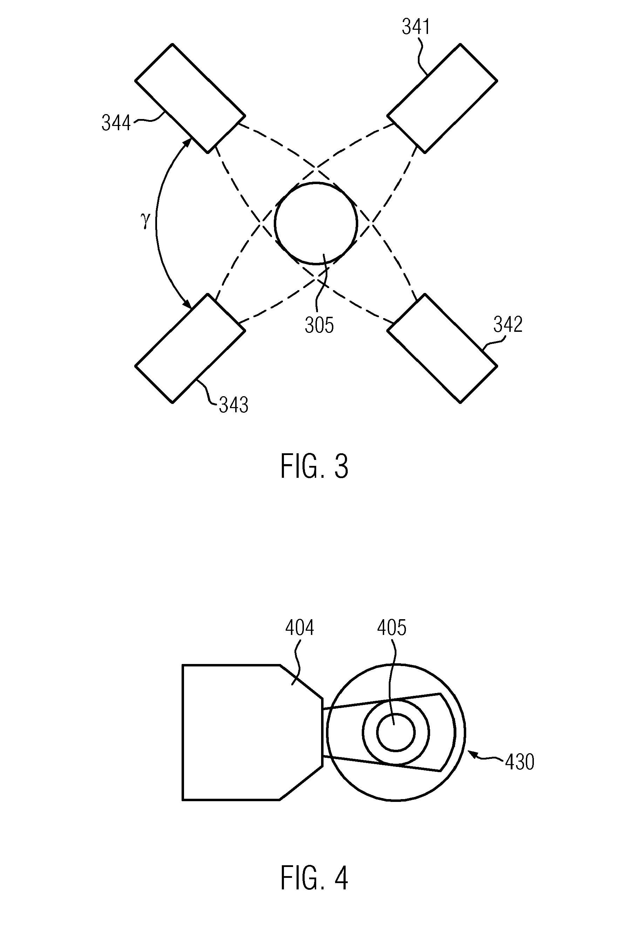

In order to provide an even more homogeneous emission profile that leads to pumping of the active medium, Figure 3 shows an arrangement wherein multiple blocks 341-344 are arranged at a distance (for example the distance h described before) from an active medium 305. In order to provide for a preferably homogeneous pumping profile (i.e. the radiation that incides at a given point of the active medium 305 when taking into account radiation that incides on this point from any of the blocks 341-344 and the laser diodes included there), it can be advantageous to arrange the blocks 341-344 with an angular distance to each other, wherein the angular distance of two adjacent blocks, 343 and 344 for example, is the same for each pair of adjacent blocks 341-344 and is given by $\gamma$, wherein $\gamma$ is defined by $\dfrac{2\pi}{n}$, where n is the total number of blocks. Thereby, the blocks 341-344 form an equilateral n-gon. Thereby, rotational symmetry of the pumping profile can be (nearly) achieved. In view of this, it is even more advantageous if the number n of blocks 341-344 is even.

In order to enhance the pumping process even further, it can be advantageous to provide a reflector that surrounds the active medium 405, wherein this reflector comprises portions as shown in Figure 4, through which the radiation that is emitted from the laser diodes in the block 401 can be transmitted. When this radiation incides on the opposing inner surface of the reflector 430, this radiation is reflected. Preferably, the complete inciding emission is reflected from the inner surface of the reflector, such that it incides on active medium 405. Thereby, the pumping radiation being emitted from the laser diodes can be absorbed to a high degree from the active medium. Preferably, the degree of absorption is at least 90%, or even more.

## 2) Reflector

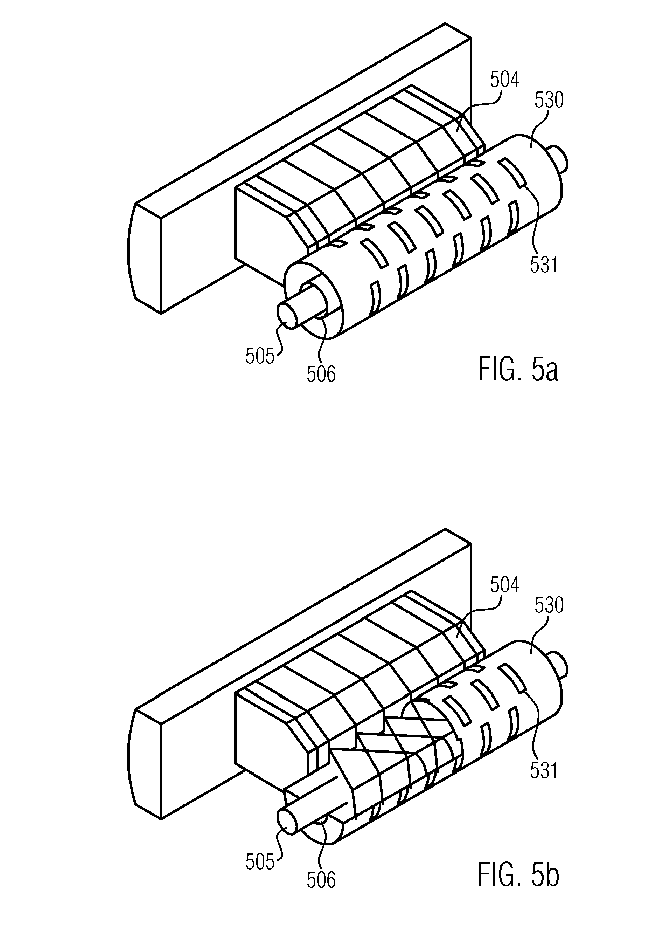

Typically, a quartz cylinder, being coated with for example a gold coating, is used for the reflector. Such coatings tend to detach from the quartz cylinder in particular under heavy thermal load. The coating is mechanically too weak to be self supporting and is supported by the quartz cylinder. In order to enhance manufacturing processes and reliability, a self-supported cylinder of a radiation reflecting metal, such as copper, can be used. Figure 5a shows a corresponding arrangement of the reflector 530 being arranged around the active medium 505. This reflector can be arranged such that the advantageous effects of a correspondingly arranged system of laser diodes as described above can be provided, although using a corresponding reflector being made of a self-supported metal cylinder, can be advantageous in any way. In view of Figure 5a, the reflector has a cylindrical shape, as has the active medium 505. Further, the reflector 530 is placed at a distance from the active medium 505. In the space between the active medium 505 and the reflector 530, a cooling agent such as water can be inserted and/or circulated. However, as the self-supported reflector 530 is made of metal, which preferably is a very good heat conductor (like iron, copper, gold, or silver), a cooling agent being inserted in the space 506 between the reflector 530 and the active medium can be omitted in case the heat which is transferred from the active medium 505 to the reflector 530 is transported out of the system by efficiently cooling the reflector 530. This yields a further miniaturization of a corresponding laser system and provides an additional advantage in view of reflecting the laser radiation being emitted from laser diodes in order to pump the active medium, since this radiation will no longer have to pass through the cooling agent which would lead to an amount of energy being absorbed in the cooling agent.

As can be seen in Figure 5b, the reflector 530 comprises gap portions 531. These gap portions 531 are arranged such that radiation being emitted from laser diodes that are arranged in block 504 can be transmitted through the reflector onto the active medium 505 in order to pump said active medium. As the reflector 530 can be manufactured for example with the help of milling and/or cutting and/or drilling processes, these portions 531 can be placed very precisely in order to allow a maximum amount of radiation to be transmitted through the portions 531 from the laser diodes in block 504. In order to further stabilize the active medium 505 and the reflector 530, it can be advantageous to provide a quartz cylinder that is placed between the active medium 505 and the reflector 530 and is joined to the reflector 530. Further, it can be advantageous to join the quartz cylinder to the active medium. In view of this, and in case the active medium has a cylindrical shape, it is preferred that the reflector 530 is arranged concentrically around the active medium with respect to the longitudinal axis of the active medium. In case a quartz cylinder is used, the same holds for this quartz cylinder.

The reflector may be made of copper, which has good heat conductivity and good reflectivity in the infrared radiation region and has good manufacturability. The thickness of the wall of the reflector may be in the range of 0.5mm to 2mm, such as between 0.75mm and 1.25mm.

## 3) Improved pump procedure

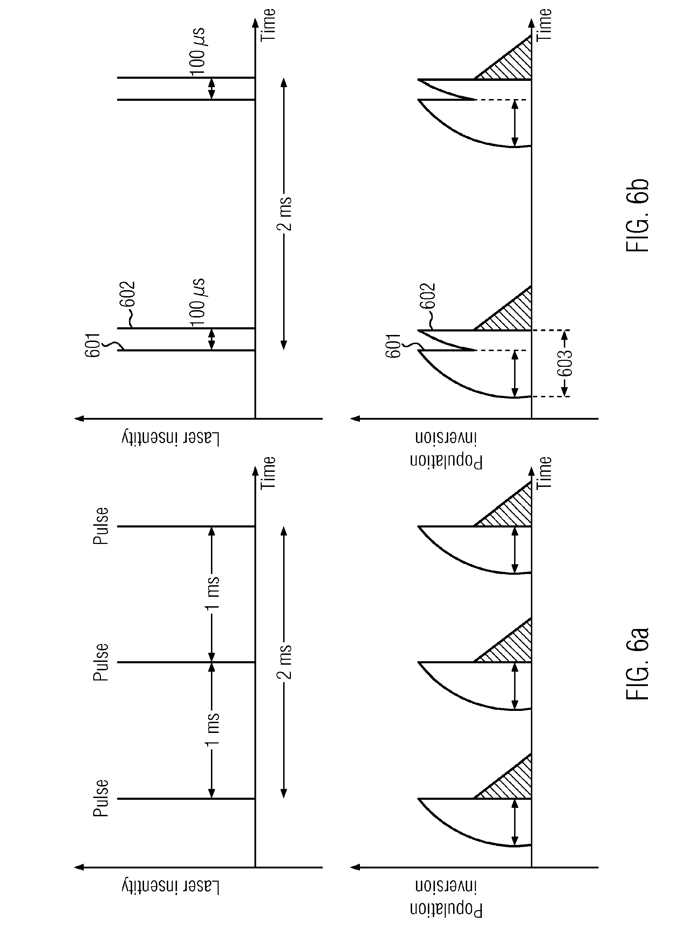

In a further aspect of the present invention, a method for pumping an active medium of a laser system is provided that provides advantages with respect to the efficiency of the pumping process. In order to illustrate this advantage and how this method works, Figures 6a and 6b show a comparison between laser systems according to the prior art (Figure 6a) and a laser system that is pumped according to the inventive method provided here.

The laser system as shown in Figures 1 to 5, or any other laser system, is provided in a cavity which comprises a Q-switch element, such as a Pockels cell. Thereby, the emission of pulses from the active medium can be controlled. It is sufficient to have an active laser medium and the Q-switch element within the laser cavity. One of the cavity mirrors may have a higher reflectivity than the other one.

According to Figure 6a, within a time span of approximately 2ms, three pulses are generated, each being separated from the other by 1 ms. It is noted that Figures 6a and 6b do only show a schematic depiction and, therefore, it is assumed that the pulses have an infinitely (i.e. relatively) short duration. In order to make the corresponding active medium emit laser energy with the shown laser intensity, a population inversion has to be generated in the active medium by pumping said active medium. This is shown in the second graph of Figure 6a. Therefore, the active medium is pumped before the laser pulse is emitted, for example by a corresponding Q-switch operation. In case the necessary population inversion is reached, the Q-switch is operated and the first laser pulse is emitted. After that, the system returns to its ground state, thereby transmitting undirected and incoherent radiation which, for example, results in the heating of the active medium. It is to be noted that, in the prior art, the active medium is only pumped until the desired population inversion is reached. For each pulse, i.e. the first, second and third, shown in the first graph of Figure 6a, a corresponding pumping process has to be carried out and, as shown in the gray area of the second graph of Figure 6a, energy is lost after the Q-switch operation has ended and the emission of laser energy from the active medium is stopped.

In order to prevent this, the invention suggests a different approach. According to Figure 6b, laser pulses are generated as couples or packets of pulses that are emitted within a short time of each other. After these two pulses have been emitted there is a break until the next pulses are emitted. This break is referred to herein as the non-pumping period. According to the invention, the two laser pulses 601 and 602 are emitted within one pumping period. As can be seen in the second graph of Figure 6b, first, like in the prior art, in order to produce the population inversion for the first laser pulse 601, a population inversion is generated from the ground state of the system (i.e. the active medium). When the population inversion required for (high power) lasering is achieved, a Q-switch operation is carried out and the first laser pulse 601 is emitted. However, in contrast to the prior art lasers, the pumping period does not end with the emission of the first pulse but is continued. Therefore, a second laser pulse 602 can be generated by operating a Q-switch operation without the disadvantage of losing energy as in the prior art after creation of the first laser pulse due to the stop of the pumping process. When the second laser pulse 602 is transmitted, and the Q-switch operation has ended, the pumping may end as well.

Therefore, the system then returns to the ground state. Therefore, some energy is lost as it is translated into incoherent radiation and heating of, for example, the active medium. However, compared to the prior art laser system, this loss of energy does not occur after each laser pulse but only after each pumping period, during which a plurality of laser pulses can be generated.

It is to be noted that a plurality of laser pulses can be generated depending on the duration of the pumping period and the pumping power. As an example, it might be intended to produce less than 2, 5, 10, or even 100 laser pulses within one pumping period. As this leads to stress and heating of the active medium and the corresponding laser diodes that pump the active medium, the non-pumping period may be very long in order to ensure that the components are not damaged. As an example, the pumping periods can have durations less than $200\mu s$, $500\mu s$, 1 ms, 2ms, 5ms, 10ms, 20ms, 50ms, or even more milliseconds. Depending on the input power that is used by the laser diodes in order to pump the active medium, the non-pumping periods may be equally as long as the pumping periods, or maybe shorter, or maybe even longer. For example, depending on the input power, a pumping period that is $250\mu s$ long may be followed by a non-pumping period that has a duration of $1750\mu s$, in case the input power is very high and yields a significant amount of stress to the above mentioned components. In case the input power is only moderate or low, the non-pumping period may have a duration of 1 ms, as has the pumping period, or even less, for example $50\mu s$. It is preferred that the pumping periods always have the same duration and, further, the non-pumping periods may also have the same, but perhaps different, duration. Therefore, the pumping periods are repeated periodically.

However, depending on the implementation within a laser system, it might also be advantageous to vary the duration of the non-pumping periods and/or the pumping periods in order to provide a more flexible laser system. For example, if a first plurality of 10 laser pulses is necessary, and in a following step, another plurality of 50 laser pulses is necessary, the first pumping period may have a duration of 100ms and the second pumping period may have a duration of 500ms. As the stress caused to the components in the first pumping period is comparably low, compared to the second pumping period, the non-pumping period may be short, for example 0.5 or 1 ms as well. As the stress to the components (active medium and laser diodes) is significantly higher in the second pumping period, the non-pumping period following this second pumping period may be much longer, for example 5 or 10ms or even 200ms.

As the above described method is very flexible, a variety of input powers can be used. For example, the input power for pumping the active medium can be more than 100W or more than 500W, or even more than 1000W. Depending on the non-pumping period, each of the laser diodes may provide a corresponding amount of input power with which the active medium is pumped.

## 4) Improved cooling device

According to this embodiment, a cooling device is provided for a laser system like those mentioned above, wherein this cooling device comprises at least one sensor for measuring the flow of the cooling agent and/or the temperature of the cooling agent, wherein this sensor is adapted to transmit, to a control unit, a signal being indicative of the flow of the cooling agent and/or the temperature of the cooling agent, and the control unit being adapted to control a cooling agent supply, based on the received signal.

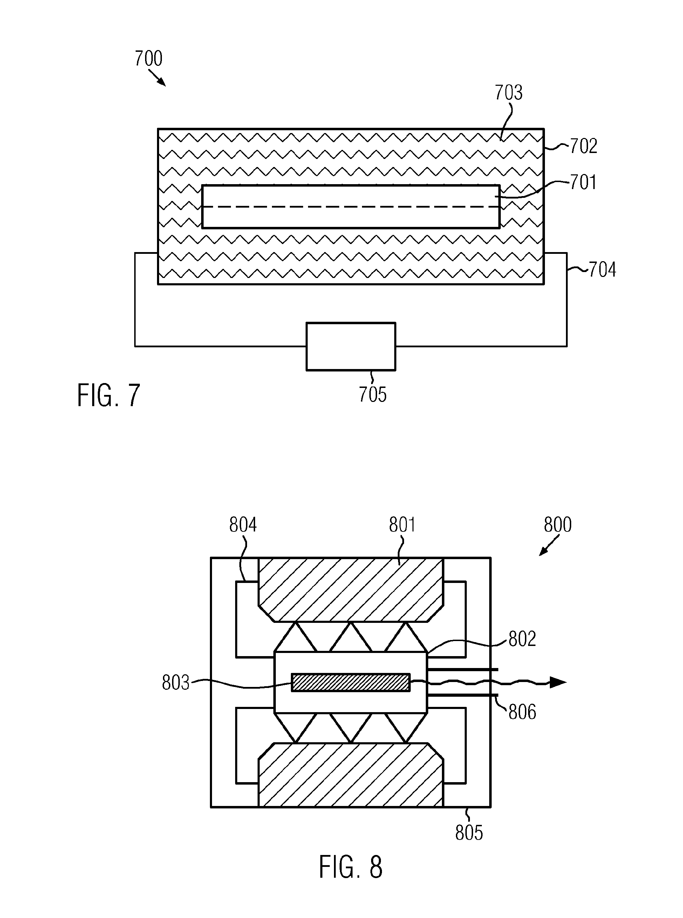

As an example, Figure 7 shows a corresponding laser system with the cooling system according to the invention. The laser system according to the invention comprises an active medium 701, a case 702, that at least partially, or only partially, surrounds the active medium 701, a cooling agent supply 705, and supply line 704 that is adapted to provide the cooling agent to the inside of the case and to transmit used cooling agent from the case 702 to the cooling agent supply 705. The cooling agent supply may cool down used cooling agent before again providing it to the supply line 704. The cooling agent can be, for example, water, or any other suitable fluid. A fluid may be used whose thermal expansion coefficient is small.

According to one embodiment, a plurality of sensors is provided in the case 702, preferably on the inner surface of the case 702. In view of this, it can be advantageous to provide the plurality of sensors such that adjacent sensors with respect to the longitudinal axis L of the active medium 701 are arranged at equidistant distances. The data obtained from the sensor can also be used to calculate a temperature gradient and providing a corresponding signal to the cooling agent supply 705. Depending on the temperature gradient of the cooling agent, the flow of the cooling agent, and the pressure with which the cooling agent is pumped into the case 702, can be increased or decreased. As an example, in case the temperature gradient shows that the cooling agent is heated by the active medium 701 to a critical temperature before passing at least three quarters of the length of the case 702, the cooling agent supply 705 can control the flow of the cooling agent such that more cooling agent is pumped inside the case 702 and is conducted away from the case 702. Preferably, the inlet and the outlet of the supply line 704 are, as shown in Figure 7, on opposing sides of the case 702. It can also be advantageous to provide more than one supply line, not only to ensure cooling even if one of the supply lines fails, but also to increase the flow rate of the cooling agent.

The sensors, or only one sensor, may also be provided in the supply line 704, in particular in the portion leading cooling agent from the case 702 to the cooling agent supply 705.

## 5) Miniaturized laser system

In order to increase the efficiency of prior art laser systems and laser systems in accordance with the above-explained embodiments, a miniaturized laser system is provided. According to this embodiment of the invention, a complete laser system 800 is provided within an electromagnetically almost completely sealed box 805, wherein the laser system comprises an active medium 803, a case 802 that surrounds the active medium 803, and may be provided with a laterally surrounding reflector, and further laser diodes being arranged in blocks 801 for pumping the active medium 803. Preferably, the box 805 only comprises one opening 806 through which the radiation emitted from the active medium can be emitted. Such enclosure of components of the laser system prevents unintended emission of electromagnetic radiation. Further, according to one embodiment, the length of current carrying conduits, like cables, is reduced to the minimum length wherein, preferably, the whole conduit is placed within the box 805. Preferably, only one conduit connection is provided that connects the laser system 800 with an energy supply. Such a casing of a laser system renders the laser system suitable for application, at for example a hospital, as potentially dangerous radiation is no longer emitted from the device 800.

In order to further reduce the amount of electromagnetic radiation that is emitted, there can be provided a channel, from the opening 806, to the active medium 803 that is on a boundary surface sealed against transmission of electromagnetic radiation other than that emitted from the active medium.

A supply of cooling agent may be provided outside of the laser system 800.

Optionally, all electronics that operate in a pulsed mode for driving the laser diodes are contained within the box 805. A power supply to the box 805 may be a DC or an AC power supply (at e.g. 50 or 60 Hz), which, lower, does not provide a pulsed mode for driving the laser diodes.

## Claims

1. A laser system comprising an active medium and at least one laser diode, or a plurality of laser diodes, that is/are adapted to pump the active medium, **characterized in that** the laser diode(s) is/are arranged such that a radiation plane of laser radiation emitted from the laser diode(s) and corresponding to the greatest emission angle $\alpha$ is/are essentially parallel or oblique to a longitudinal axis of the active medium.

2. Laser system according to claim 1, further comprising one or more blocks surrounding the active medium, wherein each of the blocks comprises a plurality of laser diodes, wherein each of the laser diodes is arranged such that the radiation plane of laser radiation emitted from the laser diode and corresponding to the greatest emission angle $\alpha$ is essentially parallel or oblique to the longitudinal axis of the active medium.

**3.** Laser system according to claim 2, **characterized in that** the laser diodes are arranged, in at least one block, with a distance d to each other and the block being arranged in a distance h from the active medium, wherein the distance h is given by

$$h \geq \tan\left(\frac{\pi}{2} - \frac{\alpha}{2}\right) \cdot \frac{d}{2}.$$

**4.** Laser system according to claim 2 or 3, **characterized in that** the laser diodes of each block are arranged on a straight line being parallel to the longitudinal axis of the active medium.

**5.** Laser system according to any of claims 2 to 4, **characterized in that** the blocks are arranged in an angular distance to each other, wherein the angular distance of two adjacent blocks is $\dfrac{2\pi}{n}$, where n is the number of blocks.

**6.** Laser system according to any of claims 1 to 5, further comprising a reflector being arranged between the active medium and the laser diode and surrounding the active medium and comprising gap portions that are transparent for the radiation that can be emitted by the laser diode, wherein the reflector is formed such that radiation that can be emitted from the laser diode and can pass through the active medium via at least one of the gap portions can be reflected onto the active medium.

**7.** Laser system comprising an active medium and a reflector being arranged such that the reflector surrounds the active medium with at distance to the active medium **characterized in that** the reflector comprises a self-supporting cylinder consisting at least in part of a metal, e.g. copper.

**8.** Laser system according to claim 7, **characterized in that** the reflector further comprises a quartz-cylinder, wherein the quartz-cylinder and the reflector are joint together and/or the quartz cylinder is inserted into the reflector.

**9.** Laser system according to claim 7 or 8, **characterized in that** the laser system further includes laser diodes being arranged outside of the reflector, wherein the reflector comprises gap portions being transparent for laser radiation that is emitted from the laser diodes and that are arranged such that, when the laser diodes emit laser radiation, the laser radiation can incite, through the gap portions, onto the active medium.

**10.** Laser system according to any of claims 7 to 9, **characterized in that** the active medium has a cylindrical shape and the reflector is arranged concentrically around the active medium.

**11.** Method for pumping an active medium of a Q-switch laser system with a plurality of laser diodes, the method being **characterized in that** the active medium is pumped continuously during pumping periods of a predetermined duration, the pumping periods being provided periodically and being separated by non-pumping periods, wherein, during each pumping period, at least two laser pulses are emitted from the active medium, wherein each of the at least two laser pulses is caused by a corresponding Q-switch operation in the pumping period.

**12.** Method according to claim 11, **characterized in that** each pumping period has a duration of more or less than $100\mu s$, or $200\mu s$, or $500\mu s$, or 1 ms, or 2ms, or 5ms and/or each non-pumping period has a duration of more or less than 1 ms, or 2ms, or 5ms, or 10ms, or 20ms, or 50ms, or 100ms.

**13.** Method according to claim 11 or 12, **characterized in that** the duration of the non-pumping period is equal to the duration of the pumping period or the duration of the non-pumping period is not equal to, in particular longer, such as e.g. at least 10 times longer than the duration of the pumping period.

**14.** Method according to any of claims 11 to 13, wherein the power by which the active medium is pumped is at least 100W, at least 500W, or more than 1000W.

**15.** Laser system comprising an active medium and a plurality of laser diodes, adapted to pump said active medium, **characterized in that** the laser system is suitable to operate according to the method according to any of claims 11 to 14 and/or wherein the laser system is a laser system according to any of claims 1 to 10.

FIG. 1

FIG. 2a

FIG. 2b

FIG. 2c

FIG. 3

FIG. 4

504
530
531
505
506

FIG. 5a

504
530
531
505
506

FIG. 5b

FIG. 6a

FIG. 6b

700

703

702

701

704

FIG. 7

705

804    801    800

802

803

806

805

FIG. 8

Europäisches
Patentamt

European
Patent Office

Office européen
des brevets

# EUROPEAN SEARCH REPORT

Application Number

EP 13 16 7241

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/196883 A1 (RIEGER HARRY [US]) 7 October 2004 (2004-10-07) | 1-5,15 | INV. H01S3/094 |
| Y | * paragraphs [0023] - [0037]; figures 1-3 * | 3,6-10 | H01S3/0941 H01S3/02 |
| | ----- | | |
| X | DE 195 18 177 A1 (FRAUNHOFER GES FORSCHUNG [DE]) 21 November 1996 (1996-11-21) | 1,2, 4-10,15 | ADD. H01S3/102 |
| Y | * column 5, line 9 - column 8, line 30; figures 1-6,8,9 * | 3,6-10 | H01S3/11 H01S3/042 H01S3/06 |
| | ----- | | H01S3/10 |
| X | US 2002/018288 A1 (RIEGER HARRY [US] ET AL) 14 February 2002 (2002-02-14) | 1,2,4,5, 7-9,15 | |
| Y | * paragraphs [0069] - [0071], [0095], [0106] - [0129], [0133], [0134], [0138]; figures 7-12,20 * | 3,6-10 | |
| | ----- | | |

TECHNICAL FIELDS
SEARCHED        (IPC)

H01S
B23K

~~The present search report has been drawn up for all claims~~

| Place of search | Date of completion of the search | Examiner |
|---|---|---|
| Munich | 9 August 2013 | Laenen, Robert |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-10, 15

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 13 16 7241

The Search Division considers that the present European patent application does not comply with the requirements of unity of invention and relates to several inventions or groups of inventions, namely:

1. claims: 1-10, 15

   Claims 1-10,15 comprise in common a laser system as defined in claim 1, i.e. a laser having an active medium being laterally pumped by at least one laser diode with its fast axis arranged essentially parallel to the optical axis of the active medium.
   ---

2. claims: 11-14

   Claims 11-14 comprise in common a method for pumping a Q-switched laser having an active medium being pumped by a plurality of laser diodes in a quasi-cw manner while bursts of at least two Q-switched pulses are emitted during each pumping period.
   ---

**ANNEX TO THE EUROPEAN SEARCH REPORT**
**ON EUROPEAN PATENT APPLICATION NO.**

EP 13 16 7241

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2013

| Patent document cited in search report | Publication date | Patent family member(s) | Publication date |
|---|---|---|---|
| US 2004196883 A1 | 07-10-2004 | US 2004196883 A1<br>WO 2004091058 A2 | 07-10-2004<br>21-10-2004 |
| DE 19518177 A1 | 21-11-1996 | DE 19518177 A1<br>WO 9637021 A1 | 21-11-1996<br>21-11-1996 |
| US 2002018288 A1 | 14-02-2002 | EP 1415372 A2<br>JP 2005506687 A<br>US 2002018288 A1<br>US 2005271111 A1<br>WO 03007679 A2 | 06-05-2004<br>03-03-2005<br>14-02-2002<br>08-12-2005<br>30-01-2003 |

EPO FORM P0459

For more details about this annex : see Official Journal of the European Patent Office, No. 12/82